# EUROPÄISCHE PATENTANMELDUNG

(11) **EP 1 790 307 A1**
(43) Veröffentlichungstag der Anmeldung: **30.05.2007**
(21) Anmeldenummer: 05027938.9
(22) Anmeldetag: 20.12.2005
(51) Int. Cl.: A61C 1/08, A61C 17/00

(54) **Beleuchtungsvorrichtung für zahnärtzliche Behandlungen**

(30) Priorität: 25.11.2005 DE 102005056575
(71) Anmelder: Roser, Christian, 79248 Merzhausen (DE)
(72) Erfinder: Roser, Christian, 79248 Merzhausen (DE)
(74) Vertreter: Lucht, Silvia

(57) **Zusammenfassung**

Es wird eine Beleuchtungsvorrichtung für zahnärztliche Behandlungen mit mindestens einer Schiene (1, 11) zum Anordnen an oder auf mehreren benachbarten Zähnen eines Menschen oder eines Tieres vorgeschlagen. In die Schiene (1, 11) sind mehrere Leuchtmittel (2, 12) integriert. Eine Spannungsquelle (3, 13) für die Leuchtmittel (2, 12) ist entweder an oder in der Schiene (1, 11) befestigt oder mit der Schiene (1, 11) über einen elektrischen Leiter (4, 14) verbunden. Elektrische Leiter (5, 15) dienen zum Verbinden der Leuchtmittel (2, 12) mit der Spannungsquelle (3, 13).

## Beschreibung

Die Erfindung geht aus von einer Beleuchtungsvorrichtung für zahnärztliche Behandlungen.

Aus dem Stand der Technik sind als Beleuchtungsvorrichtungen Operationsleuchten bekannt, welche oberhalb der Behandlungsliege eines Zahnarztes an einem Träger schwenkbar angeordnet sind. Diese Operationsleuchten haben den Nachteil, dass sie die zu behandelnden Zähne nicht ausreichend beleuchten können. Die Werkzeuge zur Zahnbehandlung und die Hände des behandelnden Zahnarztes befinden sich im Strahlengang zwischen der Operationsleuchte und den Zähnen. Sie erzeugen einen Schatten im Bereich der zu behandelnden Stelle im Mundraum. Die unregelmäßig geformten Zähne mit ihrer zwei- oder vierhöckerigen Krone können ebenfalls einen Schatten an der zu behandelnden Stelle erzeugen. Die unzureichende Beleuchtung erschwert die Behandlung und führt dazu, dass bei der Behandlung Fehler auftreten können.

Der Erfindung liegt daher die Aufgabe zu Grunde, eine Beleuchtungsvorrichtung für zahnärztliche Behandlungen zur Verfügung zu stellen, mit der die zu behandelnde Stelle von allen Seiten beleuchtet werden kann, ohne dass Werkzeuge, benachbarte Zähne oder der behandelnde Zahnarzt einen Schatten im Bereich der zu behandelnden Stände verursachen. Diese Aufgabe wird durch eine Beleuchtungsvorrichtung mit den Merkmalen des Anspruchs 1 gelöst.

Gegenüber den bekannten Operationsleuchten hat die erfindungsgemäße Beleuchtungsvorrichtung mit den Merkmalen des Anspruchs 1 den Vorteil, dass sie eine geringe Größe aufweist und anhand geeigneter Befestigungsmittel nahe der zu behandelnden Stelle innerhalb des Mundes befestigt wird. Die Beleuchtungsvorrichtung besteht aus mindestens einer Schiene, mehreren in die Schiene integrierten Leuchtmitteln und einer Spannungsquelle für die Leuchtmittel. Dabei kann die Spannungsquelle in oder an der Schiene angeordnet sein oder über einen elektrischen Leiter mit der Schiene verbunden sein. Im letzteren Fall wir die Spannungsquelle außerhalb des Mundraums abgeordnet. Findet eine Behandlung im Bereich des Oberkiefers statt, so wird die Beleuchtungsvorrichtung auf oder an den darunter liegenden Zähnen angeordnet. Die Schiene kann entweder auf den Zähnen oder neben den Zähnen im Zwischenraum zwischen den Zähnen und der Backenhaut angeordnet werden. Wird die Schiene auf den Zähnen angeordnet, so ist eine Befestigung zweckmäßig, damit sich die Schiene während der Zahnbehandlung nicht verschieben kann. Wird die Schiene dagegen zwischen den Zähnen und der Backenhaut angeordnet, so ist eine Befestigung nicht unbedingt notwendig, da je nach Patient die Schiene durch die elastische Backenhaut in ihrer Position eingeklemmt wird.

Die Leuchtmittel sind beispielsweise in einer Reihe in der Schiene angeordnet. Sie sorgen daher dafür, dass die zu behandelnde Stelle aus nächster Nähe von verschiedenen Richtungen beleuchtet wird. Dabei sind die Leuchtmittel in die Schiene eingebettet. Ist das Material der Schiene durchsichtig, so kann die Schiene die Leuchtmittel von allen Seiten vollständig umschließen. In diesem Fall eine Reinigung und Desinfektion der Schiene besonders einfach.

Nach einer vorteilhaften Ausgestaltung der Erfindung ist eine Befestigungseinrichtung zum Befestigen der Schiene an einem oder mehreren Zähnen vorgesehen. Dabei kann es sich beispielsweise um elastische Elemente, Klammern oder dentale Haftmassen handeln. Derartige elastische Elemente oder Klammern sind bei Zahnspangen und Zahnprothesen bekannt. Dentale Haftmassen sind aus der Zahnbehandlung bekannt. Mit derartigen Befestigungseinrichtungen kann die Beleuchtungsvorrichtung schnell und einfach an den Zähnen befestigt und nach der Behandlung von den Zähnen wieder gelöst werden.

Nach einer weiteren vorteilhaften Ausgestaltung der Erfindung besteht die Schiene aus mindestens zwei beweglich miteinander verbundenen Gliedern. Damit kann die Form der Schiene verändert werden. Dies ermöglicht eine Anpassung der Schiene an den Verlauf der Zähne, an denen sie angeordnet wird. Dabei ist es außerdem von Vorteil, wenn die Reibung zwischen den Gliedern so groß ist, dass eine von Hand eingestellte Form der Schiene erhalten bleibt. Um eine Desinfektion der Schiene trotz der zwischen den Gliedern gebildeten Zwischenräumen zu gewährleisten, kann die Schiene von einer durchsichtigen Hülle, beispielsweise einem Schlauch umgeben sein.

Nach einer weiteren vorteilhaften Ausgestaltung der Erfindung sind in die Schiene Kanäle integriert. Die Kanäle weisen an den Außenseiten der Schiene Öffnungen auf. An der Schiene ist ein Anschluss zum Anschließen einer Saugleitung zum Absaugen von Flüssigkeiten, wie beispielsweise Speichel oder Blut vorgesehen. Die Beleuchtungsvorrichtung erfüllt somit zusätzlich die Funktion eines Saugers, mit dem während der Zahnbehandlung Speichel und andere Flüssigkeiten aus dem Mundraum entfernt werden können. Auf einen zusätzlichen Sauger kann in diesem Fall verzichtet werden. Dadurch steht für die Zahnbehandlung mehr Platz im Mundraum zur Verfügung.

Nach einer weiteren vorteilhaften Ausgestaltung der Erfindung besteht die Schiene aus einem mundverträglichen Kunststoff, beispielsweise aus einem Prothesenkunststoff. Dieser Kunststoff hat den Vorteil, dass er die Leuchtemittel vollständig von allen Seiten umschließen kann, dass er die Gesundheit des Patienten nicht belastet und dass er nach der Behandlung durch geeignete Lösungen und Verfahren desinfiziert werden kann. Diese Voraussetzungen erfüllen auch die gegebenenfalls außerhalb der Schiene befindlichen elektrischen Leiter sowie die Spannungsquelle. Nach einer weiteren vorteilhaften Ausgestaltung der Erfindung wird daher als Leiter zwischen der Spannungsquelle und der Schiene ein Dentaldraht eingesetzt.

Nach einer weiteren vorteilhaften Ausgestaltung der Erfindung ist als Spannungsquelle eine Batterie oder ein Akkumulator vorgesehen. Derartige Spannungsquellen haben den Vorteil einer geringen Größe. Sie beeinträchtigen daher die Behandlung des Zahnarztes nicht.

Nach einer weiteren vorteilhaften Ausgestaltung der Erfindung sind Leuchtmittel mit Licht im sichtbaren oder im UV-Wellenlängenbereich vorgesehen. Als Licht im sichtbaren Wellenlängenbereicht wird bevorzugt weißes Licht eingesetzt. Elektromagnetische Strahlung im UV-Wellenlängenbereich dient zum Aushärten von Kunststofffüllmassen. In einer besonders bevorzugten Ausgestaltung sind an der Schiene sowohl Leuchtmittel im sichtbaren Wellenlängenbereich als auch UV-Leuchtmittel vorgesehen. Je nach Bedarf kann zwischen den beiden Arten von Leuchtmitteln umgeschaltet werden.

Nach einer weiteren vorteilhaften Ausgestaltung der Erfindung sind als Leuchtemittel Leuchtdioden vorgesehen. Sie haben den Vorteil, dass sie eine geringe Größe, einen geringen Stromverbrauch und eine hohe Leuchtkraft aufweisen. Besonders bevorzugt werden Leuchtdioden eingesetzt, welche weißes Licht erzeugen können.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausführungsbeispiel einer erfindungsgemäßen Beleuchtungsvorrichtung dargestellt. Es zeigen:
- Figur 1: Beleuchtungsvorrichtung in einer Ansicht von oben,
- Figur 2: Beleuchtungsvorrichtung gemäß Figur 1 in einer Ansicht von der Seite,
- Figur 3: zweites Ausführungsbeispiel einer Beleuchtungsvorrichtung in einer Ansicht von der Seite.

### Beschreibung des Ausführungsbeispiels

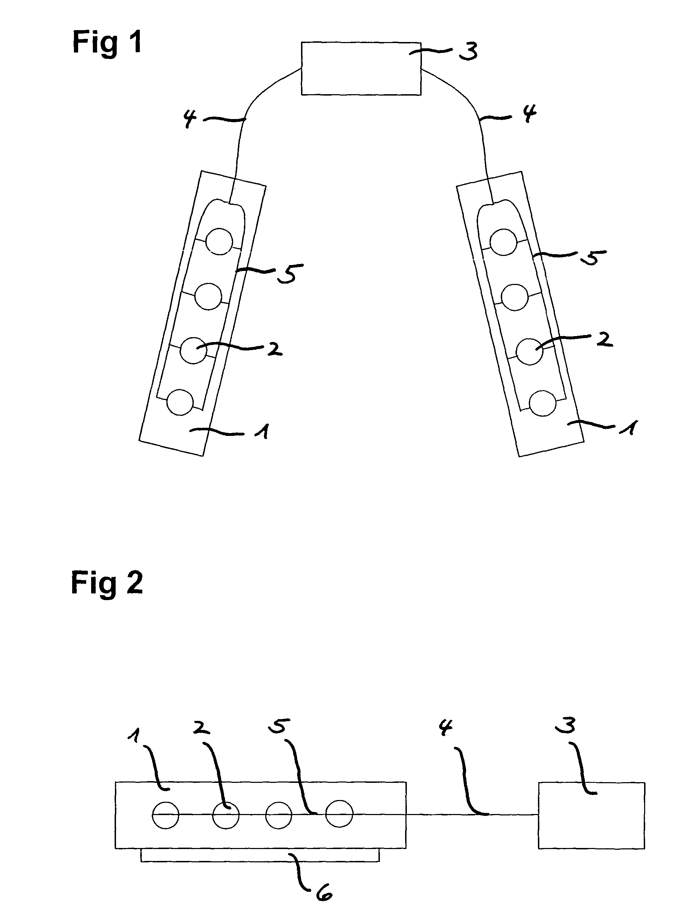

Die in den Figuren 1 und 2 dargestellte Beleuchtungsvorrichtung besteht aus zwei Schienen 1 mit jeweils vier Leuchtdioden 2, einem Akkumulator 3 und mehreren elektrischen Leitern 4 und 5. Dabei dienen die elektrischen Leiter 4 zum Verbinden der beiden Schienen 1 mit dem Akkumulator 3. Die elektrischen Leiter 5 sowie die Leuchtdioden 2 werden vollständig von dem durchsichtigen Kunststoffmaterial der Schienen 1 umschlossen. Sie verbinden jede der Leuchtdioden 2 über die elektrischen Leiter 4 mit dem Akkumulator 3. Die in Figur 1 dargestellte Anordnung der Beleuchtungsvorrichtung ist geeignet, um die beiden Schienen 1 an den rechten und linken Vorbacken- und Backenzähnen des Ober- oder Unterkiefers zu befestigen. Der Akkumulator 3 wird im Bereich der Schneidezähne angeordnet.

In der Seitenansicht gemäß Figur 2 ist die dentale Haftmasse 6 dargestellt, mit der die Schienen 1 an den in der Zeichnung nicht erkennbaren Zähnen befestigt werden.

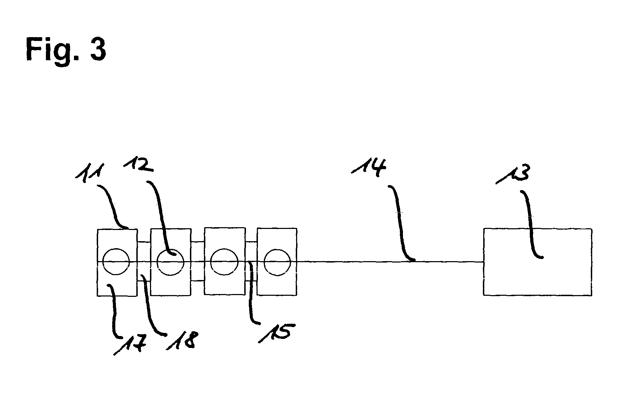

Figur 3 zeigt ein zweites Ausführungsbeispiel einer Beleuchtungsvorrichtung. Die Schiene 11 besteht aus einzelnen Gliedern 17, die über flexible Elemente 18 miteinander verbunden sind. In jedem Glied 17 ist eine Leuchtdiode 12 angeordnet. Diese sind über elektrische Leiter 14 und 15 miteinander und mit einem Akkumulator 13 verbunden. Die Glieder 17 können relativ zueinander bewegt werden um die Schiene an die Zähne eines Patienten anzupassen.

Sämtliche Merkmale der Erfindung können sowohl einzeln als auch in beliebiger Kombination miteinander erfindungswesentlich sein.

### Bezugszahlen

- 1: Schiene
- 2: Leuchtdiode
- 3: Akkumulator
- 4: Elektrischer Leiter
- 5: Elektrischer Leiter
- 6: Dentale Haftmasse
- 7:
- 8:
- 9:
- 10:
- 11: Schiene
- 12: Leuchtdiode
- 13: Akkumulator
- 14: Elektrischer Leiter
- 15: Elektrischer Leiter
- 16:
- 17: Glied
- 18: Flexibles Element

## Patentansprüche

1. Beleuchtungsvorrichtung für zahnärztliche Behandlungen
mit mindestens einer Schiene (1, 11) zum Anordnen an oder auf mehreren benachbarten Zähnen eines Menschen oder eines Tieres,
mit mehreren in die Schiene (1, 11) integrierten Leuchtmitteln (2, 12),
mit einer Spannungsquelle (3, 13) für die Leuchtmittel (2, 12), welche an oder in der Schiene (1, 11) befestigt ist oder mit der Schiene (1, 11) über einen elektrischen Leiter (4, 14) oder ein flexibles Element verbunden ist,
mit elektrischen Leitern (5, 15) zum Verbinden der Leuchtmittel (2, 12) mit der Spannungsquelle (3, 13).

2. Beleuchtungsvorrichtung nach Anspruch 1, **dadurch gekennzeichnet, dass** an der Schiene (1, 11) eine Befestigungseinrichtung (6) zum Befestigen der Schiene (1, 11) an einem oder mehreren Zähnen vorgesehen ist.

3. Beleuchtungsvorrichtung nach Anspruch 2, **dadurch gekennzeichnet, dass** als Befestigungseinrichtung elastische Elemente oder Klammern vorgesehen sind.

4. Beleuchtungsvorrichtung nach Anspruch 2, **dadurch gekennzeichnet, dass** als Befestigungseinrichtung eine dentale Haftmasse (6) vorgesehen ist.

5. Beleuchtungsvorrichtung nach einem der vorhergehenden Ansprüche, **dadurch gekennzeichnet, dass** die Schiene (11) aus mindestens zwei beweglich miteinander verbundenen Gliedern (17) besteht.

6. Beleuchtungsvorrichtung nach einem der vorhergehenden Ansprüche, **dadurch gekennzeichnet, dass** in die Schiene (1, 11) Kanäle integriert sind, dass die Kanäle Öffnungen an den Außenseiten der Schiene aufweisen, und dass an der Schiene ein Anschluss zum Anschließen einer Saugleitung zum Absaugen von Flüssigkeiten vorgesehen ist.

7. Beleuchtungsvorrichtung nach einem der vorhergehenden Ansprüche, **dadurch gekennzeichnet, dass** die Schiene (1, 11) aus einem mundverträglichen Kunststoff, insbesondere aus einem Prothesenkunststoff besteht.

8. Beleuchtungsvorrichtung nach einem der vorhergesehenen Ansprüche, **dadurch gekennzeichnet, dass** als Spannungsquelle eine Batterie oder ein Akkumulator (3, 13) vorgesehen ist.

9. Beleuchtungsvorrichtung nach einem der vorhergehenden Ansprüche, **dadurch gekennzeichnet, dass** der elektrische Leiter (4, 14) zwischen der Spannungsquelle (3, 13) und der Schiene (1, 11) aus einem Dentaldraht besteht.

10. Beleuchtungseinrichtung nach einem der vorhergehenden Ansprüche, dass Leuchtmittel mit Licht im sichtbaren und UV-Wellenlängenbereich vorgesehen sind.

11. Beleuchtungsvorrichtung nach einem der vorhergehenden Ansprüche, **dadurch gekennzeichnet, dass** als Leuchtmittel Leuchtdioden (2, 12) vorgesehen sind.

12. Beleuchtungsvorrichtung nach einem der vorhergehenden Ansprüche, **dadurch gekennzeichnet, dass** eine erste Schiene (1, 11) für die rechten Vorbacken- und Backenzähne des Ober- oder Unterkiefers und eine zweite Schiene für die linken Vorbacken- und Backenzähne vorgesehen sind, und dass jede der beiden Schienen (1, 11) mit der Spannungsquelle (3, 13) verbunden ist.
